# EUROPÄISCHE PATENTANMELDUNG

(11) **EP 3 284 951 A1**
(43) Veröffentlichungstag der Anmeldung: **21.02.2018**
(21) Anmeldenummer: 17186208.9
(22) Anmeldetag: 14.08.2017
(51) Int. Cl.: F04D 29/02, B60S 3/04, F04D 29/70

(54) **KREISELPUMPE SOWIE VORRICHTUNG ZUM REINIGEN VON FAHRZEUGRÄDERN MIT EINER SOLCHEN KREISELPUMPE**

(30) Priorität: 16.08.2016 DE 102016115209
(71) Anmelder: Hewel, Manfred, 50676 Köln (DE); Jajszycek, Maik, 53797 Köln (DE)
(72) Erfinder: Hewel, Manfred, 50676 Köln (DE); Jajszycek, Maik, 53797 Köln (DE)
(74) Vertreter: Kietzmann, Lutz

(57) **Zusammenfassung**

Die Erfindung betrifft eine elektromotorisch antreibbare Kreiselpumpe (1) für eine Vorrichtung zum Reinigen von Fahrzeugrädern, umfassend ein Pumpengehäuse (2), das einen ein Laufrad (3) aufnehmenden Pumpenarbeitsraum (4) begrenzt und einen Einlass (5) sowie mindestens einen Auslass (6) für ein ein Granulat enthaltendes Reinigungsmedium aufweist. Erfindungsgemäß ist das Pumpengehäuse (2) zumindest in einem Kontaktbereich mit dem Reinigungsmedium aus Kunststoff, insbesondere aus einem säurebeständigen Kunststoff, gefertigt.

Ferner betrifft die Erfindung eine Vorrichtung zum Reinigen von Fahrzeugrädern mit einer solchen Kreiselpumpe (1).

## Beschreibung

Die Erfindung betrifft eine Kreiselpumpe für eine Vorrichtung zum Reinigen von Fahrzeugrädern mit den Merkmalen des Oberbegriffs des Anspruchs 1. Ferner betrifft die Erfindung eine Vorrichtung zum Reinigen von Fahrzeugrädern mit einer solchen Kreiselpumpe.

### Stand der Technik

Aus der EP 0 338 509 A1 geht eine Vorrichtung zum Reinigen von Fahrzeugrädern hervor, die eine ein Kunststoffgranulat enthaltende Flüssigkeit als Reinigungsmedium einsetzt. Bei der Flüssigkeit kann es sich insbesondere um Wasser handeln. Das in der Flüssigkeit enthaltene Kunststoffgranulat soll die Reinigungswirkung verbessern, wenn das Reinigungsmedium über Sprühdüsen ausgetragen wird. Denn die im Sprühstrahl enthaltenen Granulatpartikel wirken absprengend, wenn sie auf schmutzbehaftete Stellen eines Fahrzeugrads auftreffen, so dass selbst hartnäckige am Fahrzeugrad anhaftende Verschmutzungen entfernt werden. Das Reinigungsmedium wird in einem Behälter vorgehalten und über eine ebenfalls im Behälter aufgenommene Pumpe sowie mit der Pumpe verbundene Schläuche den Sprühdüsen zugeführt. Der Einlass der Pumpe wird durch einen aufsitzenden ringförmigen Kragen gebildet, wobei die Pumpe derart im Behälter angeordnet ist, das der Kragen geringfügig unterhalb des Flüssigkeitsspiegels zu liegen kommt. Dadurch ist sichergestellt, dass die über die Pumpe angesaugte Flüssigkeit eine ausreichende Menge des Kunststoffgranulats enthält. Denn das Kunststoffgranulat besitzt eine geringere Dichte als die Flüssigkeit und schwimmt somit obenauf. Um einen sich an die Reinigung anschließenden Spülvorgang mit granulatfreier Flüssigkeit zu ermöglichen, ist der den Einlass bildende Kragen bevorzugt beweglich gelagert. Durch die bewegliche Lagerung kann der Kragen angehoben werden, so dass ein weiterer Einlass freigegeben wird, der deutlich unterhalb des Flüssigkeitsspiegels und damit unterhalb der aufschwimmenden Kunststoffgranulatpartikel zu liegen kommt. Über den weiteren Einlass saugt die Pumpe ausschließlich Flüssigkeit und keine Granulatpartikel an. Das Spülen mit granulatfreier Flüssigkeit soll der Beseitigung etwaiger am Fahrzeugrad haften gebliebener Kunststoffgranulatpartikel dienen.

Zur Optimierung des Reinigungseffekts ist aus dem Stand der Technik der Einsatz von Reinigungsmedien bekannt, die neben Kunststoffgranulat auch Tenside und/oder Säure enthalten. Derartige Reinigungsmedien greifen jedoch die in Kontakt mit dem Reinigungsmedium gelangenden Oberflächen der Pumpe bzw. des auf der Pumpe aufsitzenden Kragens an, so dass die Oberflächen mit der Zeit rau werden und zu starkem Abrieb neigen. Der Abrieb ist insbesondere auf die im Reinigungsmedium enthaltenen Granulatpartikel zurückzuführen, die beim Auftreffen auf die rauen Oberflächen zu Materialabsprengungen führen. Handelt es sich bei der Pumpe um eine Kreiselpumpe, wird dieser Effekt noch durch die zum Fördern des Reinigungsmediums eingesetzte Fliehkraft verstärkt. Denn diese bewirkt, dass die Granulatpartikel mit hoher Geschwindigkeit auf die Oberflächen auftreffen. Der mit dem Abrieb einhergehende Materialverlust führt zu einem erhöhten Verschleiß, was wiederum eine verringerte Lebensdauer der Pumpe zur Folge hat. Die Pumpe oder zumindest Teile der Pumpe muss bzw. müssen entsprechend häufig ausgetauscht werden, was einen zusätzlichen Kostenaufwand darstellt. Darüber hinaus besteht die Gefahr, dass das durch Abrieb verlorengegangene Material mit dem Reinigungsmedium ausgetragen wird und auf dem zu reinigenden Fahrzeugrad eine unansehnliche Staubschicht hinterlässt. In diesem Fall kann kein zufriedenstellendes Reinigungsergebnis erzielt werden.

Ausgehend von dem vorstehend genannten Stand der Technik liegt der vorliegenden Erfindung die Aufgabe zugrunde, eine Kreiselpumpe für eine Vorrichtung zum Reinigen von Fahrzeugrädern anzugeben, die weniger verschleißanfällig ist und somit eine erhöhte Lebensdauer besitzt. Zugleich soll der Einsatz der Kreiselpumpe in einer Vorrichtung zum Reinigen von Fahrzeugrädern zu einem verbesserten Reinigungsergebnis führen.

Die Aufgabe wird gelöst durch die Kreiselpumpe mit den Merkmalen des Anspruchs 1. Vorteilhafte Weiterbildungen der Erfindung sind in den Unteransprüchen angegeben. Darüber hinaus wird eine Vorrichtung zum Reinigen von Fahrzeugrädern angegeben, die eine erfindungsgemäße Kreiselpumpe umfasst.

### Offenbarung der Erfindung

Die für eine Vorrichtung zum Reinigen von Fahrzeugrädern vorgeschlagene Kreiselpumpe ist elektromotorisch antreibbar. Sie umfasst ein Pumpengehäuse, das einen Pumpenarbeitsraum begrenzt, in dem ein Laufrad aufgenommen ist. Ferner weist das Pumpengehäuse einen Einlass sowie mindestens einen Auslass für ein Reinigungsmedium auf, das ein Granulat enthält. Erfindungsgemäß ist vorgesehen, dass das Pumpengehäuse zumindest in einem Kontaktbereich mit dem Reinigungsmedium aus Kunststoff, insbesondere aus einem säurebeständigen Kunststoff, gefertigt ist.

In einer Vorrichtung zum Reinigen von Fahrzeugrädern werden üblicherweise Pumpen mit einem Pumpengehäuse aus Metall, insbesondere aus Eisenguss, eingesetzt. Derartige Pumpengehäuse weisen eine hohe mechanische Stabilität auf, so dass sie für die vorgesehene Anwendung als besonders geeignet erscheinen. Gelangen sie jedoch in Kontakt mit aggressiven Medien, wie beispielsweise Säuren, rauen die Oberflächen schnell auf. Da eine raue Oberfläche eine vergrößerte Angriffsfläche für die im Reinigungsmedium enthaltenen Granulatpartikel bietet, steigt mit der Rauigkeit auch der Abrieb bzw. der Verschleiß.

Dadurch, dass bei der erfindungsgemäßen Kreiselpumpe das Pumpengehäuse zumindest in einem Kontaktbereich mit dem Reinigungsmedium aus Kunststoff, insbesondere aus einem säurebeständigen Kunststoff, gefertigt ist, kann einem Aufrauen der Oberfläche und damit einem erhöhten Abrieb bzw. Verschleiß in diesem Bereich entgegengewirkt werden. Folglich steigt die Lebensdauer des Pumpengehäuses bzw. der Pumpe, so dass ein Austausch nicht mehr oder nur noch in deutlich längeren Zeitabständen erforderlich ist.

Ein zumindest in einem Kontaktbereich mit dem Reinigungsmedium aus Kunststoff, insbesondere aus einem säurebeständigen Kunststoff, gefertigtes Pumpengehäuse besitzt ferner den Vorteil, dass der Reinigungseffekt gesteigert wird. Denn mit dem Abrieb nimmt auch die Beladung des Reinigungsmediums mit feinen Staubpartikeln ab, die sich auf dem zu reinigenden Fahrzeugrad ablagern können.

Die zumindest teilweise Ausbildung des Pumpengehäuses aus Kunststoff besitzt darüber hinaus den Vorteil, dass der Anteil an Mikroplastik im Abwasser reduziert wird. Denn dadurch, dass das Pumpengehäuse zumindest im Kontaktbereich mit dem Reinigungsmedium aus Kunststoff gefertigt ist, treffen die im Reinigungsmedium enthaltenen Granulatpartikel auf eine vergleichsweise elastische Oberfläche auf, so dass keine Mikroplastikteilchen abgelöst werden. Die vorgeschlagene Kreiselpumpe kann somit besonders umweltfreundlich betrieben werden.

Vorzugsweise ist das Pumpengehäuse in allen Bereichen, die in Kontakt mit dem Reinigungsmedium gelangen können, aus Kunststoff, insbesondere aus einem säurebeständigen Kunststoff, gefertigt. Auf diese Weise kann der Verschleiß weiter gemindert werden, da sämtliche der Belastung durch das Reinigungsmedium ausgesetzte Oberflächen hinsichtlich ihrer Robustheit und damit Abriebfestigkeit optimiert sind. Ferner wird der Anteil an Mikroplastik im Abwasser auf ein Minimum reduziert.

Weiterhin vorzugsweise ist das Pumpengehäuse vollständig aus Kunststoff, insbesondere aus einem säurebeständigen Kunststoff, gefertigt, um die Herstellung des Pumpengehäuses zu vereinfachen. Die Herstellung kann beispielsweise in einem Spritzgießverfahren erfolgen.

Bevorzugt ist das Pumpengehäuse zumindest in einem Kontaktbereich mit dem Reinigungsmedium aus Polyethylen gefertigt. Polyethylen weist eine hohe Beständigkeit gegen Säuren, Laugen und weitere Chemikalien auf, so dass im Reinigungsmedium enthaltene Tenside und/oder Säuren die in Kontakt mit dem Reinigungsmedium gelangende Oberfläche nicht angreifen können. Durch ein zumindest bereichsweise aus Polyethylen gefertigtes Pumpengehäuse kann demnach die Lebensdauer der Kreiselpumpe deutlich gesteigert werden. Polyethylen nimmt zudem kaum Wasser auf, was sich als Vorteil bei einer Pumpe erweist, die - wie die vorgeschlagene Kreiselpumpe - dauerhaft in Wasser bzw. in einem auf Wasser basierenden Reinigungsmedium steht.

Des Weiteren bevorzugt wird ein Kunststoff gewählt, der nicht nur eine hohe chemische Beständigkeit, sondern zugleich eine hohe mechanische Festigkeit aufweist, um die erforderliche Stabilität des Pumpengehäuses zu gewährleisten. Da mit der mechanischen Festigkeit in der Regel auch die Abriebfestigkeit steigt, wirkt sich dies ferner als Vorteil im Hinblick auf die gewünschte Verschleißminderung aus. Vorzugsweise wird ein Polyethylen hoher Dichte (PE-HD) als Kunststoff gewählt. Weiterhin vorzugsweise wird PE-UHMW ("ultra high molecular weight") als Kunststoff gewählt, wobei es sich um ein Polyethylen hoher Dichte handelt, das eine besonders hohe mechanische Festigkeit besitzt.

Alternativ oder ergänzend wird vorgeschlagen, dass das Pumpengehäuse mindestens eine Verstärkungsrippe aufweist. Die Verstärkungsrippe führt zu einer Erhöhung der Formsteifigkeit des Pumpengehäuses bei zugleich minimalem Materialeinsatz. Denn die mindestens eine Verstärkungsrippe ermöglicht eine Reduzierung der Wandstärke des Pumpengehäuses.

Vorzugsweise ist die mindestens eine Verstärkungsrippe außenliegend angeordnet, so dass die Strömungsverhältnisse im Inneren des Pumpengehäuses, insbesondere im Pumpenarbeitsraum, durch die Verstärkungsrippe nicht beeinträchtigt werden. Beispielsweise kann mindestens eine Verstärkungsrippe an einer Oberseite und/oder an einer Unterseite des Pumpengehäuses angeordnet sein. Gemäß einer bevorzugten Ausführungsform der Erfindung weist das Pumpengehäuse mehrere radial in Bezug auf den Einlass verlaufende Verstärkungsrippen auf, die in gleichem Winkelabstand zueinander angeordnet sind. Da sich der Einlass oberseitig befindet, sind die mehreren Verstärkungsrippen bevorzugt auf der Oberseite des Pumpengehäuses angeordnet. Analog der Oberseite kann auch die Unterseite des Pumpengehäuses mehrere radial verlaufende Verstärkungsrippen aufweisen, so dass das Pumpengehäuse im Ganzen eine Aussteifung erfährt.

In Weiterbildung der Erfindung wird vorgeschlagen, dass das Pumpengehäuse einen konzentrisch zum Einlass angeordneten Kragenabschnitt ausbildet, der im Betrieb der Pumpe eine oberhalb des Einlasses gelegene Ansaugkante definiert. Über die Ansaugkante wird das Granulat enthaltende Reinigungsmedium angesaugt und über den Kragenabschnitt dem Einlass zugeführt. Die Ansaugkante gibt somit die Eintauchtiefe des Pumpengehäuses in dem Reinigungsmedium vor. Da das Granulat in der Regel obenauf schwimmt, wird vorzugsweise das Pumpengehäuse vollständig in das Reinigungsmedium eingetaucht, bis die Ansaugkante knapp unter der Oberfläche des Reinigungsmediums zu liegen kommt.

Der Kragenabschnitt des Pumpengehäuses stellt somit ein besonders stark belastetes Bauteil der Pumpe dar, da er innen- wie außenseitig durch das Granulat enthaltende Reinigungsmedium beansprucht wird. Vorzugsweise ist daher das Pumpengehäuse zumindest im Bereich seines Kragenabschnitts aus Kunststoff, insbesondere aus einem säurebeständigen Kunststoff, gefertigt. Ist das Pumpengehäuse im Ganzen aus Kunststoff, insbesondere aus einem säurebeständigen Kunststoff, gefertigt, gilt dies auch für den Kragenabschnitt, da dieser integraler Bestandteil des Pumpengehäuses ist.

Gegenüber dem eingangs genannten Stand der Technik, der eine Pumpe mit einem Pumpengehäuse und einem gegenüber dem Pumpengehäuse beweglichen Kragen offenbart, kann durch die integrale Ausbildung des Kragens die Herstellung und Montage der Kreiselpumpe vereinfacht werden. Insbesondere sinkt mit der Anzahl der Bauteile die Anzahl der erforderlichen Montageschritte.

Vorzugsweise besitzt der Kragenabschnitt über seine gesamte Höhe oder zumindest auf Höhe der Ansaugkante einen Innendurchmesser, der größer als der Innendurchmesser des Einlasses ist. Auf diese Weise kann einer Verstopfung im Ansaugbereich entgegen gewirkt werden. Der Kragenabschnitt kann hierzu hohlzylinderförmig oder zumindest abschnittsweise konisch geformt sein. Beispielsweise kann der Kragenabschnitt einen dem Einlass vorgelagerten Trichter bilden, der das im Reinigungsmedium enthaltene Granulat gezielt dem Einlass zuführt.

Als weiterbildende Maßnahme wird vorgeschlagen, dass an den Kragenabschnitt auf Höhe der Ansaugkante eine ring- oder scheibenförmige Siebvorrichtung anschließt. Die Siebvorrichtung hat die Funktion, größere Teile, die unbeabsichtigt in das Reinigungsmedium gelangen, von dem Einlass der Pumpe fernzuhalten, da diese den Einlass verstopfen können. Derartige Teile können beispielsweise Nabenkappen, Zentrierringe oder dergleichen sein, die vor dem Reinigen des Fahrzeugrads versehentlich nicht entfernt worden sind, so dass sie beim Reinigen mit weggespült werden und in den Behälter mit dem Reinigungsmedium gelangen. Gleiches gilt für Lappen oder andere Putzutensilien, die versehentlich in den Behälter fallen. Die Maschenweite der Siebvorrichtung ist demnach vergleichsweise grob gewählt und liegt vorzugsweise im Zentimeterbereich. Dadurch ist sichergestellt, dass die Siebvorrichtung kein Hindernis für das im Reinigungsmedium enthaltene Granulat darstellt. Denn der Durchmesser der Granulatpartikel liegt vorzugsweise unter 10 mm.

Die Siebvorrichtung kann einstückig mit dem Kragenabschnitt ausgebildet sein. Vorzugsweise sind die Siebvorrichtung und der Kragenabschnitt aus Kunststoff, insbesondere aus einem säurebeständigen Kunststoff, gefertigt, so dass die Robustheit der Pumpe weiterhin gewährleistet ist. Denn analog dem kragenabschnitt ist auch die Siebvorrichtung einer erhöhten Belastung durch das im Reinigungsmedium enthaltene Granulat ausgesetzt.

Alternativ wird vorgeschlagen, dass die Siebvorrichtung mit dem Kragenabschnitt lösbar verbunden ist. Sollte ein Fremdkörper durch die Siebvorrichtung hindurch in den Ansaugbereich der Pumpe gelangen, kann die Siebvorrichtung vom Kragenabschnitt abgenommen und der Fremdkörper entfernt werden.

Die Siebvorrichtung weist vorzugsweise eine zentrale Ausnehmung zum Hindurchführen einer Antriebswelle eines Elektromotors auf. Im Bereich der Ausnehmung kann die Siebvorrichtung eine Verstärkung in Form eines Kragens oder eines Stegs aufweisen, der die Formsteifigkeit der Siebvorrichtung erhöht.

Vorteilhafterweise ist das Pumpengehäuse mehrteilig ausgeführt und umfasst zumindest ein oberes sowie ein unteres Pumpengehäuseteil. Die mehrteilige Ausführung erleichtert die Montage der Pumpe, insbesondere das Einsetzen des Laufrads in den Pumpenarbeitsraum. Die beiden Pumpengehäuseteile sind vorzugsweise halbschalenartig ausgebildet und in der Weise aneinandergesetzt, dass sie gemeinsam den Pumpenarbeitsraum umschließen. Das obere Pumpengehäuseteil bildet dabei bevorzugt den Einlass und den Kragenabschnitt aus, so dass die durch den Kragenabschnitt definierte Ansaugkante oben zu liegen kommt, wenn die Kreiselpumpe in einen Behälter einer Vorrichtung zum Reinigen von Fahrzeugrädern eingesetzt wird.

Bevorzugt weisen das obere und das untere Pumpengehäuseteil jeweils außenumfangseitig angeordnete, ring- oder hülsenförmige Aufnahmen für Befestigungsmittel, insbesondere für Schrauben oder Schraubbolzen, auf. Die Aufnahmen sind vorzugsweise derart angeordnet und orientiert, dass sie übereinander zu liegen kommen, so dass in jeweils zwei übereinanderliegende Aufnahmen ein Befestigungsmittel eingesetzt werden kann. Die Befestigungsmittel können der Verbindung der beiden Pumpengehäuseteile miteinander und/oder mit einer Haltevorrichtung dienen, die vorzugsweise außerhalb des Behälters mit dem Reinigungsmedium angeordnet ist. Die Schrauben bzw. Schraubbolzen sind dann ggf. entsprechend zu verlängern.

Des Weiteren bevorzugt ist der mindestens eine Auslass des Pumpengehäuses seitlich angeordnet. Das heißt, dass der mindestens eine Auslass im Wesentlichen senkrecht in Bezug auf den Einlass angeordnet ist. Sofern das Pumpengehäuse zwei aufeinander gesetzte Pumpengehäuseteile besitzt, wird vorgeschlagen, dass beide Pumpengehäuseteile jeweils einen seitlichen Auslass ausbilden. Über zwei Auslässe können in einfacher Weise zwei Sprühdüsen mit dem Reinigungsmedium versorgt werden, wobei die beiden Sprühdüsen bevorzugt derart angeordnet und orientiert werden, dass das zu reinigende Fahrzeugrad von beiden Seiten angesprüht wird.

Der mindestens eine seitliche Auslass ist vorzugsweise als Stutzen ausgeführt. Die Ausführung als Stutzen erleichtert den Anschluss eines Schlauchs, um die Verbindung zu einer Sprühdüse herzustellen. Die Sprühdüse kann in diesem Fall entfernt zur Pumpe, beispielsweise in einer vom Behälter für das Reinigungsmedium getrennten Sprühkammer, angeordnet werden.

Ferner wird vorgeschlagen, dass der als Auslass dienende Stutzen im Wesentlichen radial oder tangential in Bezug auf das Laufrad ausgerichtet ist. Auf diese Weise kann die über das Laufrad erzeugte Fliehkraft im Betrieb der Kreiselpumpe optimal zur Druckbeaufschlagung des Reinigungsmediums genutzt werden.

Analog dem Pumpengehäuse kann auch das im Pumpenarbeitsraum aufgenommene Laufrad aus Kunststoff, insbesondere aus einem säurebeständigen Kunststoff, gefertigt sein, um den Verschleiß im Kontaktbereich mit dem Reinigungsmedium zu mindern. Auf diese Weise kann die Lebensdauer der Kreiselpumpe weiter gesteigert werden. Bei dem Kunststoff kann es sich insbesondere um ein Polyethylen handeln, das die bereits zuvor beschriebenen Vorteile besitzt. Da das Laufrad im Betrieb der Kreiselpumpe durch die im Reinigungsmedium enthaltenen Granulatpartikel besonders stark beansprucht wird, kann es sich insbesondere um ein Polyethylen hoher Dichte (PE-HD), beispielsweise PE-UHMW, handeln.

Bevorzugt weist das Laufrad im Wesentlichen radial angeordnete Schaufeln auf. Weiterhin bevorzugt verlaufen die Schaufeln räumlich gekrümmt. Durch die räumliche Krümmung der Schaufeln wird eine verbesserte Führung der im Reinigungsmedium enthaltenen Granulatpartikel in Richtung des mindestens einen Auslasses bewirkt.

Das Laufrad ist vorzugsweise drehfest mit einer Antriebswelle eines Elektromotors verbunden, die durch den Einlass des Pumpengehäuses in den Pumpenarbeitsraum geführt ist. Der Innendurchmesser des Einlasses ist derart zu dimensionieren, dass ein ausreichend großer Ringspalt zwischen dem Pumpengehäuse und der Antriebswelle verbleibt, durch den das im Reinigungsmedium enthaltene Granulat in den Pumpenarbeitsraum gelangt.

An ihrem dem Pumpengehäuse abgewandten Ende ist die Antriebswelle mit dem Elektromotor verbunden. Der Elektromotor kommt somit oberhalb des Pumpengehäuses und vorzugsweise oberhalb des Behälters zu liegen, in dem das Reinigungsmedium aufgenommen ist. Dadurch entfallen aufwendige Abdichtungsmaßnahmen, um den Elektromotor vor dem Reinigungsmedium zu schützen.

Gemäß einer bevorzugten Ausführungsform einer erfindungsgemäßen Kreiselpumpe bildet der dem Einlass vorgelagerte Kragenabschnitt ein separates Gehäuseteil aus, das kraft- und/oder formschlüssig mit dem übrigen Pumpengehäuse verbunden ist. Die Ausbildung des Kragenabschnitts als separates Gehäuseteil erleichtert die Herstellung des Pumpengehäuses, da die Form der einzelnen Teile weniger komplex als die Gesamtform ist. Beispielsweise kann das Pumpengehäuse ein den Einlass ausbildendes oberes Pumpengehäuseteil, ein unteres Pumpengehäuseteil sowie einen Kragenabschnitt aufweisen, der in diesem Fall mit dem den Einlass ausbildenden oberen Gehäuseteil kraft- und/oder formschlüssig verbunden ist. Die kraft- und/oder formschlüssige Verbindung verhindert ein unerwünschtes Lösen des Kragenabschnitts, so dass sichergestellt ist, dass der Zulauf des Reinigungsmediums stets über den dem Einlass vorgelagerten Kragenabschnitt erfolgt. Vorzugsweise ist die kraft- und/oder formschlüssige Verbindung des Kragenabschnitts mit dem übrigen Pumpengehäuse über eine Steck-, Klemm-, Press-, Rast- und/oder Schraubverbindung hergestellt. Denn zum Einen sind derartige Verbindungen einfach und kostengünstig herzustellen. Zudem Anderen können sie bei Bedarf wieder gelöst werden, um beispielsweise einen Teiletausch zu ermöglichen.

Als weiterbildende Maßnahme wird vorgeschlagen, dass der Kragenabschnitt einen dem Einlass vorgelagerten Trichter ausbildet, der sich in Richtung des Einlasses verjüngt und einen im Wesentlichen hohlzylinderförmigen Ansatz aufweist, über den der Kragenabschnitt mit dem Pumpengehäuse, vorzugsweise mit dem oberen Pumpengehäuseteil, kraft- und/oder formschlüssig verbunden ist. Die Trichterform begünstigt den Zulauf des Reinigungsmediums in Richtung des Einlasses, wobei der hohlzylinderförmige Ansatz analog einem Trichter in den Einlass eingreifen oder den Einlass umgreifen kann. Letzteres setzt voraus, dass der Einlass selbst einen Kragenabschnitt aufweist bzw. durch einen Kragenabschnitt begrenzt wird, so dass der hohlzylinderförmige Ansatz bevorzugt auf diesen aufgesteckt, aufgeklemmt, aufgepresst oder aufgeschraubt werden kann. Um eine Verdrehung des trichterförmigen Kragenabschnitts gegenüber dem übrigen Pumpengehäuse zu verhindern, kann der hohlzylinderförmige Ansatz mindestens eine stirnseitige Ausnehmung aufweisen, in die eine oberseitig auf dem Pumpengehäuse ausgebildete Erhebung eingreift. Bei der Erhebung kann es sich beispielsweise um eine Verstärkungsrippe handeln, die oberseitig auf dem Pumpengehäuse ausgebildet ist.

Des Weiteren bevorzugt weist der Kragenabschnitt einen an Stegen befestigten Innenring zur Begrenzung und/oder Unterteilung einer Durchströmöffnung des Kragenabschnitts auf. Die Stege verlaufen vorzugsweise radial, so dass die Durchströmöffnung sektorförmig unterteilt wird. Vorzugsweise sind die Stege in gleichem Winkelabstand zueinander angeordnet, so dass die Sektoren gleich groß sind. Die über den Innenring und die Stege bewirkte Begrenzung und/oder Unterteilung der Durchströmöffnung verhindert, dass größere Teile, wie beispielsweise Nabenkappen, Zentrierringe oder Lappen, die versehentlich in das Reinigungsmedium gelangen, bis zum Einlass vordringen und diesen verstopfen. Der Innenring und die Stege vermögen somit eine Siebvorrichtung zu ersetzen, die einstückig mit dem Kragenabschnitt ausgebildet oder mit dem Kragenabschnitt verbunden ist. Der Innenring und die Stege sind vorzugsweise im Bereich des einlassnahen Endes des konisch zulaufenden Abschnitts und/oder im Bereich des hohlzylinderförmigen Ansatzes des Kragenabschnitts angeordnet, da hier die Durchströmöffnung kleiner als auf Höhe der Ansaugkante ist. Das heißt, dass mit wenigen und zudem kurzen Stegen bereits eine wirksame Unterteilung der Durchströmöffnung erreichbar ist. Da der Innenring das Hindurchführen der Antriebswelle ermöglichen muss, ist dessen Innendurchmesser im Wesentlichen vorgegeben.

Gemäß einer weiteren bevorzugten Ausführungsform der Erfindung umfasst das Pumpengehäuse ein mit dem Auslass kraft- und/oder formschlüssig verbundenes Adapterstück für den Anschluss mindestens einer Schlauchleitung bzw. eines Schlauchs. Durch das zusätzliche Adapterstück kann die Form der übrigen Gehäuseteile des Pumpengehäuses weiter vereinfacht werden. Über die kraft- und/oder formschlüssige Verbindung ist die erforderliche Dichtheit im Verbindungsbereich sichergestellt. Ergänzend kann zwischen dem Adapterstück und dem Auslass ein ringförmiges Dichtelement eingelegt sein.

Da vorzugsweise mindestens zwei Schlauchleitungen bzw. Schläuche an die Kreiselpumpe angeschlossen werden, um mindestens zwei Sprühdüsen mit Reinigungsmedium zu versorgen, wird in Weiterbildung des Adapterstücks vorgeschlagen, dass dieses Y-förmig ausgeführt ist. Das heißt, dass das Adapterstück zugleich die Funktion eines Verteilers besitzt. Um das Reinigungsmedium möglichst gleichmäßig auf die beiden angeschlossenen Schlauchleitungen bzw. Schläuche zu verteilen, ist das Adapterstück bevorzugt in der Weise mit dem Auslass verbunden, dass ein erster und ein zweiter Abgang übereinander liegen. Das heißt, dass der radiale Abstand der beiden Abgänge in Bezug auf die Drehachse des Laufrads gleich groß ist. Ferner bevorzugt weisen die beiden Abgänge jeweils einen Innendurchmesser auf, der kleiner als der Innendurchmesser des Auslasses ist. Auf diese Weise wird eine Reduzierung des Strömungsquerschnitts bzw. eine Anpassung des Strömungsquerschnitts an den der Schlauchleitungen bzw. Schläuche erreicht.

Da die Vorteile einer erfindungsgemäßen Kreiselpumpe insbesondere in Verbindung mit einer Vorrichtung zum Reinigen von Fahrzeugrädern zum Tragen kommen, wird ferner eine solche Vorrichtung mit einer erfindungsgemäßen Kreiselpumpe und einem Behälter vorgeschlagen, in dem ein Granulat enthaltendes Reinigungsmedium aufgenommen ist. Zumindest das Pumpengehäuse der Kreiselpumpe ist dabei vollständig in das Reinigungsmedium eingetaucht, so dass vorzugsweise die Ansaugkante des Kragenabschnitts geringfügig unterhalb der Oberfläche des Reinigungsmediums zu liegen kommt. Dies ist der Bereich, in dem sich das Granulat sammelt, da es eine geringere Dichte als die das Granulat aufnehmende Flüssigkeit aufweist und somit oben auf schwimmt.

Bevorzugte Ausführungsformen der Erfindung werden nachfolgend anhand der beigefügten Zeichnungen näher erläutert. Diese zeigen:
Fig. 1 eine perspektivische Darstellung einer erfindungsgemäßen Kreiselpumpe mit Elektromotor gemäß einer ersten bevorzugten Ausführungsform,
Fig. 2 eine perspektivische Darstellung der beiden Teile des Pumpengehäuses der Kreiselpumpe der Fig. 1 vor der Montage,
Fig. 3 eine Draufsicht auf das Laufrad der Kreiselpumpe der Fig. 1,
Fig. 4 eine schematische Schnittansicht durch eine erfindungsgemäße Kreiselpumpe gemäß einer zweiten bevorzugten Ausführungsform,
Fig. 5 eine schematische Schnittansicht durch eine erfindungsgemäße Kreiselpumpe gemäß einer dritten bevorzugten Ausführungsform,
Fig. 6 eine Explosionsdarstellung einer erfindungsgemäßen Kreiselpumpe gemäß einer vierten bevorzugten Ausführungsform,
Fig. 7 einen Längsschnitt durch die Kreiselpumpe der Fig. 6,
Fig. 8 eine Seitenansicht der Kreiselpumpe der Fig. 6,
Fig. 9 eine Draufsicht auf die Kreiselpumpe der Fig. 6,
Fig. 10 eine Seitenansicht der Kreiselpumpe der Fig. 6, und zwar gegenüber der Seitenansicht der Fig. 8 um 90° im Uhrzeigersinn gedreht, und
Fig. 11 eine perspektivische Darstellung der Kreiselpumpe der Fig. 6.

### Ausführliche Beschreibung der Zeichnungen

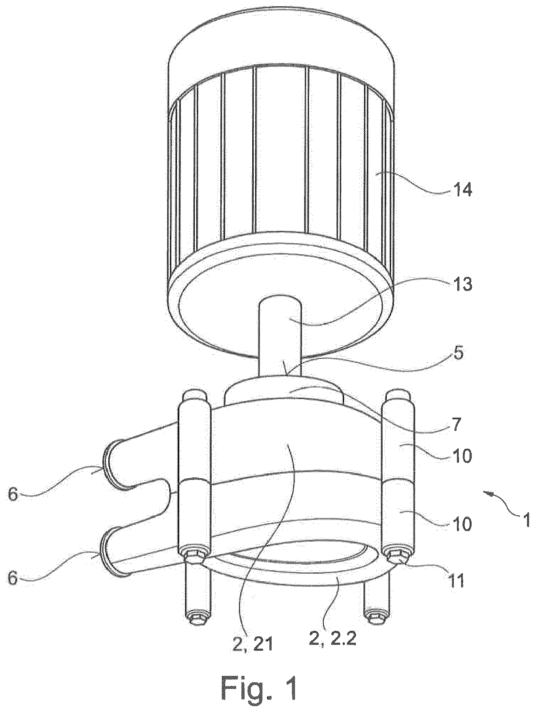

Die in der Fig. 1 dargestellte erfindungsgemäße Kreiselpumpe 1 weist ein mehrteilig ausgebildetes Pumpengehäuse 2 auf, das ein oberes erstes Pumpengehäuseteil 2.1 und ein unteres zweites Pumpengehäuseteil 2.2 umfasst. Beide Pumpengehäuseteile 2.1, 2.2 sind über Befestigungsmittel 11 in Form von Schrauben, die in seitlichen Aufnahmen 10 eingesetzt sind, miteinander verbunden.

Die beiden Pumpengehäuseteile 2.1, 2.2 umschließen einen Pumpenarbeitsraum 4 (in der Fig. 1 nicht sichtbar), in dem ein Laufrad 3 (in der Fig. 1 ebenfalls nicht sichtbar) aufgenommen ist. Das Laufrad 3 ist drehfest mit einer Antriebswelle 13 verbunden, die über einen Kragenabschnitt 7 des oberen Pumpengehäuseteils 2.1 in das Pumpengehäuse 2 eingeführt ist. Die Antriebswelle 13 ist mit einem Elektromotor 14 verbunden, der oberhalb des Pumpengehäuses 2 angeordnet ist.

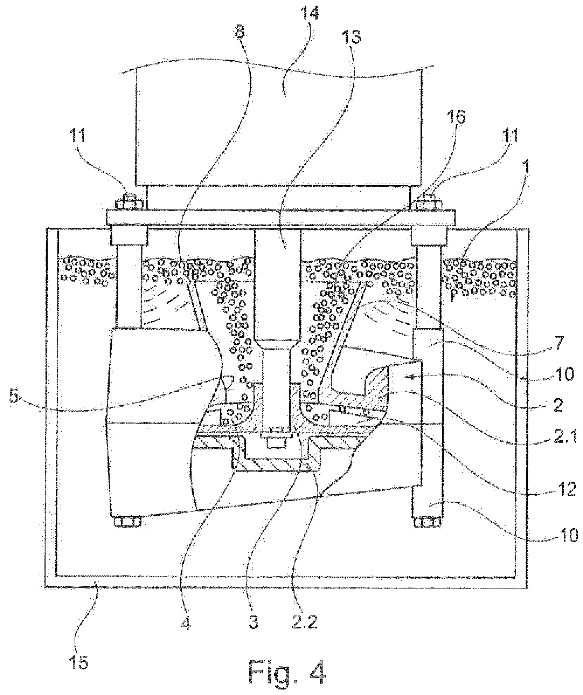

Der Kragenabschnitt 7 des oberen Pumpengehäuseteils 2.1 ist einem Einlass 5 vorgelagert und definiert eine Ansaugkante 8 (analog der Ausführungsform gemäß der Fig. 4, jedoch mit dem Unterschied, dass der Kragenabschnitt 7 der Ausführungsform gemäß der Fig. 1 hohlzylinderförmig ist). Seitlich weisen die beiden Pumpengehäuseteilen 2.1, 2.2 jeweils ein Auslass 6 in Form eines Stutzens auf, der den Anschluss eines Schlauchs (nicht dargestellt) vereinfacht.

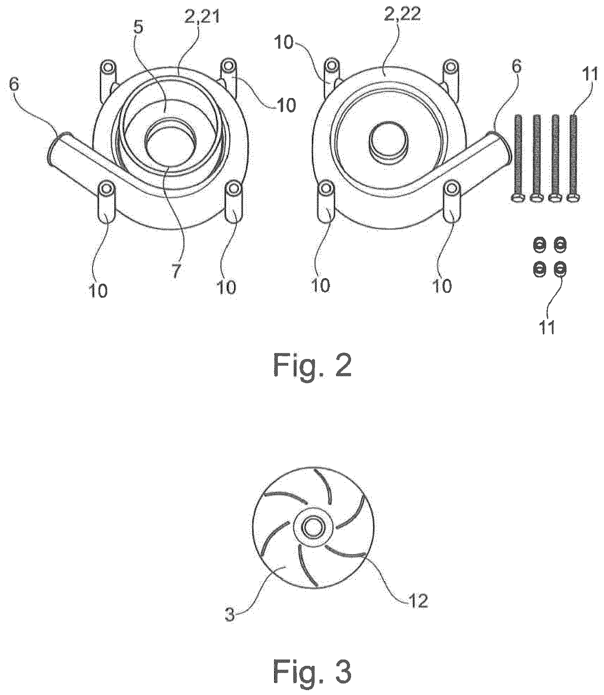

In der Fig. 2 sind die beiden Pumpengehäuseteile 2.1, 2.2 der Kreiselpumpe 1 der Fig. 1 vor der Montage dargestellt. Zur Montage werden die beiden Pumpengehäuseteile 2.1, 2.2 gespiegelt aufeinandergesetzt und mit den Befestigungsmitteln 11 (siehe Fig. 2, rechte Darstellung) verschraubt. Die Pumpengehäuseteile 2.1, 2.2 bilden dann gemeinsam den Pumpenarbeitsraum 4 aus. Das obere Pumpengehäuseteil 2.1 unterscheidet sich vom unteren Pumpengehäuseteil 2.2 dadurch, dass es den Einlass 5 und den Kragenabschnitt 7 ausbildet.

Um die Robustheit des Pumpengehäuses 2 zu steigern, sind beide Pumpengehäuseteile 2.1, 2.2 aus Kunststoff, beispielsweise aus Polyethylen hoher Dichte (PE-HD), gefertigt. Da der Kragenabschnitt 7 integraler Bestandteil des oberen Pumpengehäuseteils 2.1 ist, besteht auch dieser aus Kunststoff. Durch die Ausführung in Kunststoff steigt insbesondere die Säurebeständigkeit des Pumpengehäuses 2. Dies hat zur Folge, dass die in Kontakt mit dem Reinigungsmedium gelangenden Oberflächen weniger stark bzw. nicht mehr durch die im Reinigungsmedium enthaltene Säure angegriffen werden, so dass einem Aufrauen der Oberflächen entgegengewirkt wird. Das heißt, dass die Oberflächen über die Lebensdauer der Kreiselpumpe 1 weitgehend glatt bleiben und dem im Reinigungsmedium ferner enthaltenen Granulat keine zusätzliche Angriffsfläche bieten. Auf diese Weise kann der Abrieb, insbesondere an den Innenwänden des Pumpengehäuses 2, deutlich gemindert bzw. gänzlich unterbunden werden.

In der Fig. 3 ist das Laufrad 3 der Kreiselpumpe 1 dargestellt. Dieses ist scheibenförmig ausgebildet und weist auf seiner Oberfläche im Wesentlichen radial angeordnete Schaufeln 12 auf. Die Schaufeln 12 verlaufen zudem räumlich gekrümmt. Das Laufrad 3 kann ebenfalls aus Kunststoff gefertigt sein, so dass die Robustheit der Kreiselpumpe 1 weiter steigt.

Die Fig. 4 zeigt eine erfindungsgemäße Kreiselpumpe 1 gemäß einer zweiten bevorzugten Ausführungsform in Verbindung mit einer Vorrichtung zum Reinigen von Fahrzeugrädern. Die Vorrichtung weist einen Behälter 15 auf, der mit einem Reinigungsmedium gefüllt ist, das ein Granulat 16 enthält. Aufgrund der geringeren Dichte des Granulats 16 schwimmt dieses obenauf. Die Kreiselpumpe 1 ist in das Reinigungsmedium eingetaucht, und zwar so weit, dass die durch den Kragenabschnitt 7 definierte Ansaugkante 8 knapp unterhalb der Oberfläche des Reinigungsmediums zu liegen kommt. Der Elektromotor 14 ist außerhalb des Behälters 15 angeordnet.

In der Ausführungsform gemäß der Fig. 4 ist der Kragenabschnitt 7 trichterförmig ausgeführt, wobei sich sein Innendurchmesser von der Ansaugkante 8 bis zum Einlass 5 hin kontinuierlich verkleinert. Durch die Trichterform des Kragenabschnitts 7 wird das im Reinigungsmedium enthaltene Granulat 16 in Richtung des Einlasses 5 geleitet. Dadurch verbessert sich das Anströmverhalten.

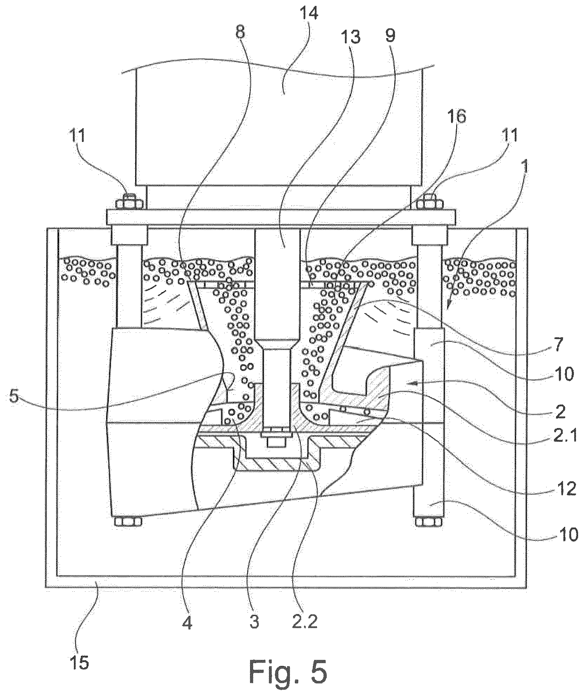

Eine Weiterbildung der Ausführungsform der Fig. 4 ist in der Fig. 5 dargestellt. Hier bildet der Kragenabschnitt 7 zugleich eine Siebvorrichtung 9 aus, die den Ansaugbereich vor Fremdkörpern, wie beispielsweise Nabenkappen, Zentrierringen oder dergleichen, schützt, die nicht in das Reinigungsmedium gehören. Der als Siebvorrichtung 9 dienende Abschnitt des Kragenabschnitts 7 ist hierzu von der Ansaugkante 8 aus nach radial innen bis dicht an die Antriebswelle 13 heran geführt, wobei die in der Siebvorrichtung 9 ausgebildeten Öffnungen ausreichend groß gewählt sind, um das Granulat 16 hindurch zu lassen. Der Durchmesser der Ansaugkante 8 des trichterförmigen Kragenabschnitts 7 ist gegenüber der Ausführungsform der Fig. 4 größer gewählt, da die Siebvorrichtung 9 den freien Öffnungsquerschnitt einschränkt.

Die Siebvorrichtung 9 kann auch als separates Bauteil ausgebildet sein, das lösbar mit dem Kragenabschnitt 7 verbunden bzw. verbindbar ist. Die Verbindung kann beispielsweise eine Steck-, Klemm-, Press- und/oder Rastverbindung sein.

Gleichwohl nicht dargestellt, kann die Siebvorrichtung 9 auch in Kombination mit einem hohlzylinderförmigen Kragenabschnitt 7 analog der Ausführungsform gemäß der Figuren 1 bis 3 realisiert werden.

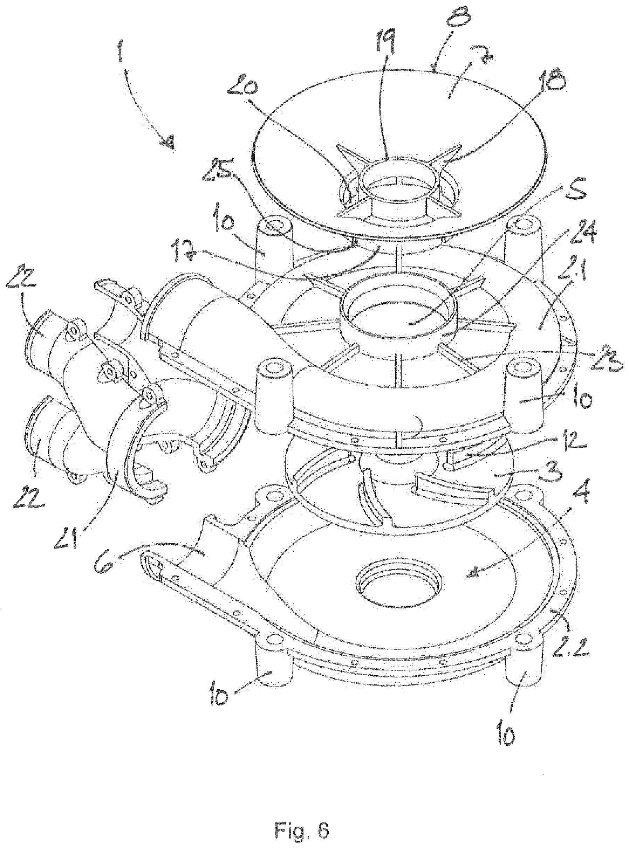

Den Figuren 6 bis 11 ist eine vierte bevorzugte Ausführungsform einer erfindungsgemäßen Kreiselpumpe 1 zu entnehmen. Bei dieser Ausführungsform weist das Pumpengehäuse 2 neben einem oberen Pumpengehäuseteil 2.1 und einem unteren Pumpengehäuseteil 2.2 einen separaten Kragenabschnitt 7 sowie ein separates Adapterstück 21 auf. Des Weiteren ist ein Laufrad 3 vorgesehen, das zwischen dem oberen und dem unteren Pumpengehäuseteil 2.1, 2.2 eingelegt wird bzw. ist (siehe Fig. 6).

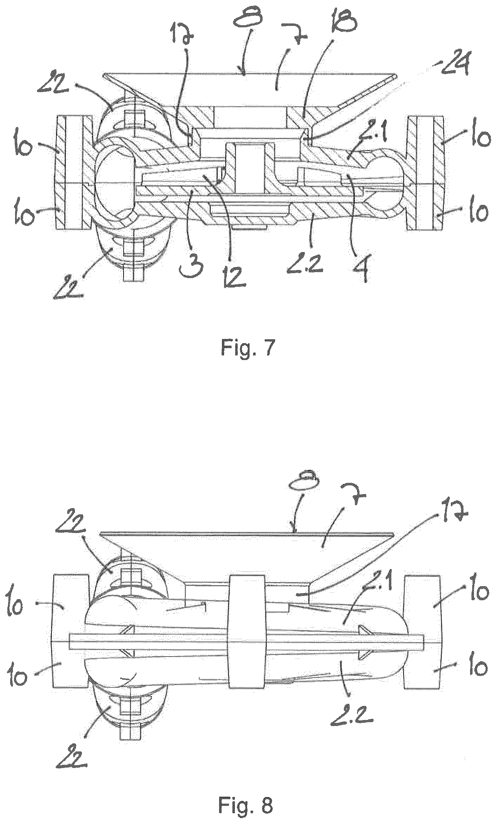

Wie insbesondere den Figuren 6 und 7 zu entnehmen ist, bildet das obere Pumpengehäuseteil 2.1 den Einlass 5 aus. Das obere Pumpengehäuseteil 2.1 weist hierzu einen hohlzylinderförmigen Ansatz 24 auf, der den Einlass 5 begrenzt und mit einem hohlzylinderförmigen Ansatz 17 des Kragenabschnitts 7 verbindbar bzw. verbunden ist. Zur Erhöhung der Formsteifigkeit weist das obere Pumpengehäuseteil 2.1 auf seiner Oberseite Verstärkungsrippen 23 auf, die in gleichem Winkelabstand zueinander rund um den Einlass 5 bzw. den hohlzylinderförmigen Ansatz 24 angeordnet sind. Zur Herstellung einer formschlüssigen Verbindung zwischen dem oberen Pumpengehäuseteil 2.1 und dem Kragenabschnitt 7 weist der hohlzylinderförmige Ansatz 17 des Kragenabschnitts 7 stirnseitige Ausnehmungen 25 auf, in welche die Verstärkungsrippen 23 eingreifen. Dadurch, dass vorliegend der hohlzylinderförmige Ansatz 24 des oberen Pumpengehäuseteils 2.1 zudem ein Pressübermaß gegenüber dem hohlzylinderförmigen Ansatz 17 des Kragenabschnitts 7 besitzt, wird zudem ein Kraftschluss erzielt.

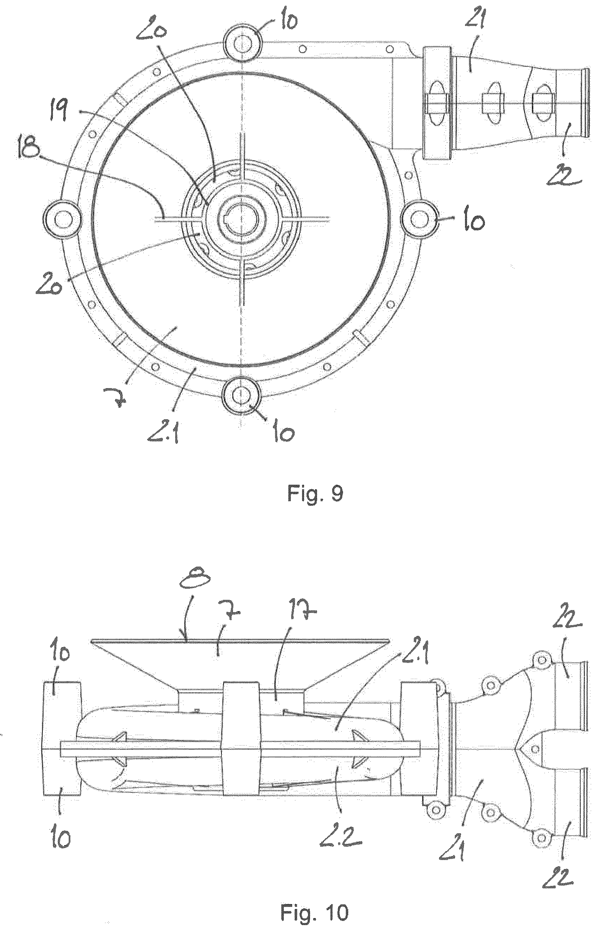

Das untere Pumpengehäuseteil 2.2 weist ebenfalls Verstärkungsrippen 23 auf, die in den Figuren 8 und 10 - gleichwohl nicht sichtbar - angedeutet sind.

Der dem Einlass 5 vorgelagerte separate Kragenabschnitt 7 bildet auch im Ausführungsbeispiel der Figuren 6 bis 11 einen sich in Richtung des Einlasses 5 verjüngenden Trichter aus. Das dem Einlass 5 abgewandte Ende des Kragenabschnitts 7 definiert dabei eine Ansaugkante 8. Zur Begrenzung und Unterteilung einer Durchströmöffnung 20 weist der Kragenabschnitt 7 einen an vier Stegen 18 gehaltenen Innenring 19 auf. Der Innendurchmesser des Innenrings 19 ist ausreichend groß dimensioniert, um eine Antriebswelle 13 (nicht dargestellt) eines Elektromotors 14 hindurch zu führen. Die Durchströmöffnung 20 des Kragenabschnitts 7 wird durch die Stege 18 in vier gleich große sektorförmige Durchströmöffnungen 20 unterteilt. Diese sind derart bemessen, dass eine Siebvorrichtung 9 analog der Ausführungsform der Fig. 5 entbehrlich ist. Die Anzahl und/oder Größe der Stege 18 kann nach Belieben variiert werden, um die sektorförmigen Durchströmöffnungen 20 zu vergrößern oder zu verkleinern.

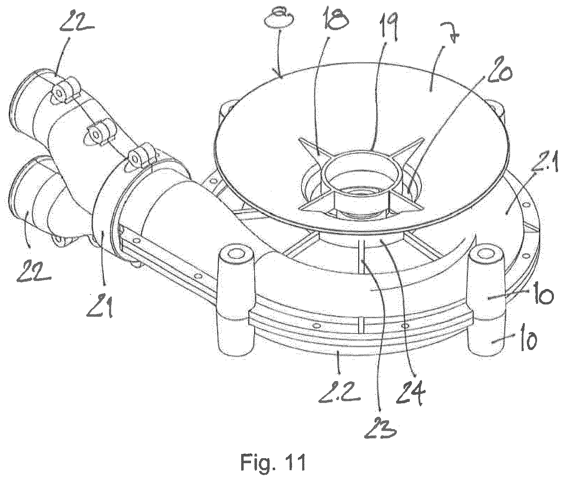

Das darüber hinaus vorgesehene separate Adapterstück 21 wird auf den stutzenförmigen Auslass 6 des Pumpengehäuses 2 aufgesteckt, vorzugsweise aufgepresst. Da das Pumpengehäuse 2 nur einen Auslass 6 aufweist, der durch das obere und das untere Pumpengehäuseteil 2.1, 2.2 gebildet wird, weist das Adapterstück 21 zur Verteilung des Reinigungsmediums auf zwei Schlauchleitungen (nicht dargestellt) zwei Abgänge 22 auf. Die beiden Abgänge 22 führen zu einer Y-Form des Adapterstücks 21. Um eine gleichmäßige Verteilung des Reinigungsmediums auf die beiden (nicht dargestellten) Schlauchleitungen sicherzustellen, liegen die beiden Abgänge 22 des Adapterstücks 21 übereinander (siehe insbesondere Figuren 10 und 11).

Bei dem Ausführungsbeispiel der Figuren 6 bis 11 ist das Adapterstück 21 mehrteilig ausgeführt. Es umfasst vorliegend zwei Y-förmige Halbschalen, die nach Art einer Rohrschelle miteinander verschraubt werden. Hierüber kann in einfacher Weise eine Klemm- oder Pressverbindung des Adapterstücks 21 mit dem stutzenförmigen Auslass 6 hergestellt werden. Die mehrteilige Ausführung des Adapterstücks 21 erleichtert zudem dessen Herstellung.

Abweichend von den Darstellungen der Figuren 6 bis 11 kann das Adapterstück 21 aber auch eine andere Form besitzen und/oder es kann einteilig ausgeführt sein.

### Bezugszeichenliste

- 1: Kreiselpumpe
- 2: Pumpengehäuse
2.1 oberes Pumpengehäuseteil
2.2 unteres Pumpengehäuseteil
- 3: Laufrad
- 4: Pumpenarbeitsraum
- 5: Einlass
- 6: Auslass
- 7: Kragenabschnitt
- 8: Ansaugkante
- 9: Siebvorrichtung
- 10: Aufnahme
- 11: Befestigungsmittel
- 12: Schaufel
- 13: Antriebswelle
- 14: Elektromotor
- 15: Behälter
- 16: Granulat
- 17: Ansatz
- 18: Steg
- 19: Innenring
- 20: Durchströmöffnung
- 21: Adapterstück
- 22: Abgang
- 23: Verstärkungsrippe
- 24: Ansatz
- 25: Ausnehmung

## Patentansprüche

1. Elektromotorisch antreibbare Kreiselpumpe (1) für eine Vorrichtung zum Reinigen von Fahrzeugrädern, umfassend ein Pumpengehäuse (2), das einen ein Laufrad (3) aufnehmenden Pumpenarbeitsraum (4) begrenzt und einen Einlass (5) sowie mindestens einen Auslass (6) für ein ein Granulat enthaltendes Reinigungsmedium aufweist,
**dadurch gekennzeichnet, dass** das Pumpengehäuse (2) zumindest in einem Kontaktbereich mit dem Reinigungsmedium aus Kunststoff, insbesondere aus einem säurebeständigen Kunststoff, gefertigt ist.

2. Kreiselpumpe nach Anspruch 1,
**dadurch gekennzeichnet, dass** der Kunststoff ein Polyethylen, insbesondere ein Polyethylen hoher Dichte, ist.

3. Kreiselpumpe nach Anspruch 1 oder 2,
**dadurch gekennzeichnet, dass** das Pumpengehäuse (2) einen konzentrisch zum Einlass (5) angeordneten Kragenabschnitt (7) ausbildet, der im Betrieb der Pumpe eine oberhalb des Einlasses (5) gelegene Ansaugkante (8) definiert.

4. Kreiselpumpe nach Anspruch 3,
**dadurch gekennzeichnet, dass** der Kragenabschnitt (7) über seine gesamte Höhe oder zumindest auf Höhe der Ansaugkante (8) einen Innendurchmesser besitzt, der größer als der Innendurchmesser des Einlasses (5) ist, wobei vorzugsweise der Kragenabschnitt (7) zumindest abschnittsweise konisch geformt ist.

5. Kreiselpumpe nach Anspruch 3 oder 4,
**dadurch gekennzeichnet, dass** an den Kragenabschnitt (7) auf Höhe der Ansaugkante (8) eine ring- oder scheibenförmige Siebvorrichtung (9) anschließt, die einstückig mit dem Kragenabschnitt (7) ausgebildet oder mit dem Kragenabschnitt (7) lösbar verbunden ist.

6. Kreiselpumpe nach einem der vorhergehenden Ansprüche,
**dadurch gekennzeichnet, dass** das Pumpengehäuse (2) mehrteilig ausgeführt ist und zumindest ein oberes sowie ein unteres Pumpengehäuseteil (2.1, 2.2) umfasst, wobei vorzugsweise das obere Pumpengehäuseteil (2.1) den Einlass (5) und den Kragenabschnitt (7) ausbildet.

7. Kreiselpumpe nach Anspruch 6,
**dadurch gekennzeichnet, dass** das obere und das untere Pumpengehäuseteil (2.1, 2.2) jeweils außenumfangseitig angeordnete, ring- oder hülsenförmige Aufnahmen (10) für Befestigungsmittel (11), insbesondere für Schrauben oder Schraubbolzen, aufweisen.

8. Kreiselpumpe nach einem der vorhergehenden Ansprüche,
**dadurch gekennzeichnet, dass** der mindestens eine Auslass (6) seitlich angeordnet ist, wobei vorzugsweise der mindestens eine Auslass (6) als Stutzen, weiterhin vorzugsweise als radial oder tangential in Bezug auf das Laufrad (3) ausgerichteter Stutzen, ausgeführt ist.

9. Kreiselpumpe nach einem der vorhergehenden Ansprüche,
**dadurch gekennzeichnet, dass** das Laufrad (3) aus Kunststoff, insbesondere aus einem säurebeständigen Kunststoff, gefertigt ist und/oder im Wesentlichen radial angeordnete Schaufeln (12) aufweist, die vorzugsweise räumlich gekrümmt verlaufen.

10. Kreiselpumpe nach einem der vorhergehenden Ansprüche,
**dadurch gekennzeichnet, dass** das Laufrad (3) drehfest mit einer Antriebswelle (13) eines Elektromotors (14) verbunden ist, die durch den Einlass in den Pumpenarbeitsraum (4) geführt ist.

11. Kreiselpumpe nach einem der Ansprüche 3 bis 10,
**dadurch gekennzeichnet, dass** der Kragenabschnitt (7) kraft- und/oder formschlüssig mit dem Pumpengehäuse (2), vorzugsweise mit dem oberen Pumpengehäuseteil (2.1) verbunden ist, wobei weiterhin vorzugsweise die kraft- und/oder formschlüssige Verbindung über eine Steck-, Klemm-,
Press-, Rast- und/oder Schraubverbindung hergestellt ist.

12. Kreiselpumpe nach einem der Ansprüche 3 bis 11,
**dadurch gekennzeichnet, dass** der Kragenabschnitt (7) einen dem Einlass (5) vorgelagerten Trichter ausbildet, der sich in Richtung des Einlasses (5) verjüngt und einen im Wesentlichen hohlzylinderförmigen Ansatz (17) aufweist, über den der Kragenabschnitt (7) mit dem Pumpengehäuse (2), vorzugsweise mit dem oberen Pumpengehäuseteil (2.1), kraft- und/oder formschlüssig verbunden ist.

13. Kreiselpumpe nach einem der Ansprüche 3 bis 12,
**dadurch gekennzeichnet, dass** der Kragenabschnitt (7) einen an vorzugsweise radial verlaufenden Stegen (18) befestigten Innenring (19) zur Begrenzung und/oder Unterteilung einer Durchströmöffnung (20) des Kragenabschnitts (7) aufweist.

14. Kreiselpumpe nach einem der vorhergehenden Ansprüche,
**dadurch gekennzeichnet, dass** das Pumpengehäuse (2) ein mit dem Auslass (6) kraft- und/oder formschlüssig verbundenes Adapterstück (21) für den Anschluss mindestens einer Schlauchleitung umfasst, wobei vorzugsweise das Adapterstück (21) Y-förmig ausgeführt ist.

15. Vorrichtung zum Reinigen von Fahrzeugrädern mit einer Kreiselpumpe (1) nach einem der vorhergehenden Ansprüche und einem Behälter (15) in dem ein Granulat (16) enthaltendes Reinigungsmedium aufgenommen ist, wobei zumindest das Pumpengehäuse (2) der Kreiselpumpe (1) vollständig in das Reinigungsmedium eingetaucht ist, so dass vorzugsweise die Ansaugkante (8) des Kragenabschnitts (7) geringfügig unterhalb der Oberfläche des Reinigungsmediums zu liegen kommt.
